# EUROPEAN PATENT APPLICATION

(11) **EP 4 276 061 A1**
(43) Date of publication of application: **15.11.2023**
(21) Application number: 22020222.0
(22) Date of filing: 12.05.2022
(51) Int. Cl.: C01B 3/38, C01B 3/50, B01J 8/04

(54) **PROCESS AND PLANT FOR PRODUCING A SYNTHESIS GAS PRODUCT FROM A FEED GAS CONTAINING HYDROCARBONS**

(71) Applicant: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventor: Shrivastava, Swatantra Kumar, D-60439 Frankfurt am Main (DE); Roesch, Alexander, D-60439 Frankfurt am Main (DE)
(74) Representative: Dropsch, Holger

(57) **Abstract**

A process for producing a synthesis gas product from a feed gas is provided. The process comprising: (i) heating the feed gas to form a superheated feed gas stream, (ii) splitting the superheated feed gas stream into first superheated feed gas partial stream and second superheated feed gas partial stream, (iii) splitting the first superheated feed gas partial stream into feed gas individual streams, (iv) reacting feed gas unit streams in reformer tubes (206A-N, 306A-N, 406A-N) to form crude synthesis gas individual streams, (v) introducing the crude synthesis gas individual streams into a crude synthesis gas manifold (112, 210, 310, 410) to obtain first hot crude synthesis gas collection stream, and (vi) converting the second superheated feed gas partial stream in a fixed bed catalytic reactor (116, 315, 415) that is disposed inside the crude synthesis gas manifold (112, 210, 310, 410), to second hot crude synthesis gas collection stream.

## Description

### TECHNICAL FIELD

The present disclosure relates generally to reforming process; more specifically, the present disclosure relates to a process and a plant for producing a synthesis gas product containing hydrogen and carbon oxides from a feed gas containing hydrocarbons, preferably natural gas or naphtha.

### BACKGROUND

Steam methane reforming (SMR) is a most common process used for producing hydrogen (H₂) in which methane and/or other hydrocarbons react with steam on a catalyst surface to produce a mixture of carbon monoxide (CO) and H₂. The overall reforming reaction is highly endothermic where heat is supplied via direct firing of fuel. High reforming temperature for economic conversion of hydrocarbons results in co-production of steam. The amount of steam produced depends upon many factors such as reforming temperature, steam to carbon (S/C) ratio, combustion air preheating and degree of heat integration. Steam is often valued less than 50% of fuel value. Accordingly, it is economical to reduce the steam co-production. However, reduction of steam co-production may be achieved at a cost of overall thermal efficiency.

Some existing solutions to reduce the steam co-production in the SMR process includes selecting reforming conditions such as low reforming temperature, high S/C ratio, and high air preheat in a reformer such that the steam production from waste heat is same as steam required for the reaction of hydrocarbons. However, operating the reformer under combination of the low reforming temperature and high S/C ratio results in significantly low efficiency. Moreover, due to the increase flow of steam through a plant such a plant will be high in investment costs.

Some existing solutions reduce the waste heat available in a system to generate steam by replacing firing duty supplied to a feed gas with heat recovered from a reformed gas. This heat exchange between the reformed gas and the feed gas is generally carried out in an external piece of equipment (such as gas heated reformer, GHR) or heat exchanger surface embedded within a catalyst bed itself (SMR-X).

The GHR offers the best operational costs saving as the heat is recovered from the reformed gas and directly transferred to the feed gas which results in direct reduction of fuel consumption and in turn also steam co-production. In order to realize the potential of GHR concept, the reformer tubes must be able to operate at a normal heat flux (<75 kilocalories/hour Square Meter (kCal/hr m²) so that the additional number of tubes are not required. The investment costs of the SMR are thus not increased. However, existing external GHRs equipment are very investment costs intensive. Moreover, exchanging heat between the reformed gas and the feed gas in an external piece of equipment poses a risk of loss of containment in case of rupture due to metal dusting. Hence, this requires to design the plant in a way that the GHR exchanger surface is confined, most suitably in already existing pressure components. However, investment costs of additional hardware's (exchange surface area, transfer line etc.) must be lower than the savings resulting from the reduced reformer size and rest of the plant.

A low capital expenditure (CapEx) and risk free (no loss of containment in case of rupture due to metal dusting ) solution is offered by reforming technologies with internal heat exchange like the SMR-X technology. However, due to the high velocity of gas in catalyst tubes in a bottom fired SMR-X based SMR, fluidization of catalyst may happen for normally applied heat flux. In order to solve this issue, heat flux in tubes must be reduced to an acceptable level of gas velocities. This results in investment costs advantage disappearing as the number of tubes required for a SMR-X based SMR will be roughly the same as a conventional SMR process.

Accordingly, existing solutions to reduce steam co-production are either not the most efficient or are not the most economical in terms of overall H₂ price.

Therefore, there is a need to address aforementioned technical drawbacks in existing known technologies in producing synthesis gas product with reduced steam co-production.

### SUMMARY

The present disclosure seeks to provide an improved approach for producing a synthesis gas product with reduced steam co-production where the capital costs are dominant in determining the overall economics. An aim of the present disclosure is to provide a solution that overcomes, at least partially, the problems encountered in prior art and provide a process and a plant in which an outlet manifold (crude synthesis gas manifold) is used to install catalyst filled tubes where a part of a feed is diverted to carry out reforming reaction, thereby reducing investment costs for additional hardware (exchange surface area, transfer line etc.). Heat for reforming reaction in the catalyst filled tubes is supplied from heat recovered from reformed gas which is flowing in the outlet manifold (outside of the catalyst filled tubes), thereby waste heat available in the plant to generate steam is reduced. The object of the present disclosure is achieved by the solutions provided in the enclosed independent claims. Advantageous implementations of the present disclosure are further defined in the enclosed dependent claims.

According to a first aspect, the present disclosure provides a process for producing a synthesis gas product containing hydrogen and carbon oxides from a feed gas containing hydrocarbons, preferably natural gas or naphtha, comprising the following steps:
(a) providing the feed gas containing hydrocarbons, preferably in desulfurized form,
(b) introducing the feed gas into a feed gas superheater, heating the feed gas in the feed gas superheater to a steam reforming inlet temperature, discharging the feed gas heated to the steam reforming inlet temperature from the feed gas superheater as a superheated feed gas stream,
(c) splitting the superheated feed gas stream into a first superheated feed gas partial stream and a second superheated feed gas partial stream,
(d) introducing the first superheated feed gas partial stream into a main reforming stage comprising a plurality of reformer tubes filled with a solid particulate reforming catalyst, the plurality of reformer tubes being arranged in a reformer furnace whose interior is heated by means of a plurality of burners,
(e) splitting the first superheated feed gas partial stream into a plurality of feed gas individual streams, supplying one feed gas individual stream each to an inlet of a reformer tube,
(f) reacting the feed gas unit streams in the plurality of reformer tubes under first steam reforming conditions to form hydrogen, carbon oxides, and unreacted hydrocarbons-containing crude synthesis gas individual streams, wherein the first steam reforming conditions comprise adding steam to the hydrocarbons-containing feed gas and adjusting a first steam to carbon ratio,
(g) discharging the crude synthesis gas individual streams from the reformer tubes and introducing the crude synthesis gas individual streams into a crude synthesis gas manifold in fluid connection with the plurality of reformer tubes, thereby obtaining a first hot crude synthesis gas collection stream,
(h) introducing the first hot crude synthesis gas collection stream into a waste heat boiler in fluid connection with the crude synthesis gas manifold, cooling the first hot crude synthesis gas collection stream in the waste heat boiler in indirect heat exchange against a water stream as coolant,
(i) discharging a cooled crude synthesis gas collection stream and a first steam stream from the waste heat boiler,
(j) feeding the cooled crude synthesis gas collection stream to at least one further purification, conditioning or processing step,
(k) feeding the second superheated feed gas partial stream to a fixed bed catalytic reactor comprising at least one catalyst bed containing a solid particulate reforming catalyst, wherein the fixed bed catalytic reactor is disposed inside the crude synthesis gas manifold and wherein the at least one catalyst bed is in an indirect heat exchange relationship with the first hot crude synthesis gas collection stream,
(l) converting the second superheated feed gas partial stream in the fixed bed catalytic reactor under second steam reforming conditions to a second hot crude synthesis gas collection stream containing hydrogen, carbon oxides and unreacted hydrocarbons, and
(m) discharging the second hot crude synthesis gas collection stream from the fixed bed catalytic reactor and introducing the second hot crude synthesis gas collection stream into the waste heat boiler along with or combined with the first hot crude synthesis gas collection stream.

The process for producing the synthesis gas product according to the present disclosure is of advantage in that the process does not require an additional plot space for the fixed bed catalytic reactor to exchange heat for reforming reaction as the fixed bed catalytic reactor with the at least one catalyst bed is disposed inside the crude synthesis gas manifold. Consequently, the process reduces capital expenditure for the plant and avoids a risk of loss of containment in case of rupture due to metal dusting. Further, the at least one catalyst bed is in the indirect heat exchange relationship with the first hot crude synthesis gas collection stream, thereby waste heat available in the plant to generate steam is used for reforming reaction in the fixed bed catalytic reactor. The process may be used either for debottlenecking hydrogen capacity of an existing plant without increasing steam co-production or design a new plant more efficiently.

According to a second aspect, the present disclosure provides a plant for producing a synthesis gas product containing hydrogen and carbon oxides from a hydrocarbon-containing feed gas, preferably natural gas or naphtha, comprising the following components in fluid connection with each other:
(a) means for providing the feed gas containing hydrocarbons, preferably in desulfurized form,
(b) a feed gas superheater, means for introducing the feed gas into the feed gas superheater, means for discharging the feed gas heated to the steam reforming inlet temperature from the feed gas superheater as a superheated feed gas stream,
(c) means for splitting the superheated feed gas stream into a first superheated feed gas partial stream and a second superheated feed gas partial stream,
(d) a main reforming stage comprising a plurality of reformer tubes filled with a solid particulate reforming catalyst, the plurality of reformer tubes being arranged in a reformer furnace whose interior is heated by means of a plurality of burners, means for introducing the first superheated feed gas partial stream into the main reforming stage,
(e) means for splitting the first superheated feed gas partial stream into a plurality of feed gas individual streams, means for supplying one feed gas individual stream each to an inlet of a reformer tube,
(f) means for discharging the crude synthesis gas individual streams from the plurality of reformer tubes and means for introducing the crude synthesis gas individual streams into a crude synthesis gas manifold in fluid connection with the plurality of reformer tubes, thereby obtaining a first hot crude synthesis gas collection stream,
(g) a waste heat boiler in fluid connection with the crude synthesis gas manifold and configured to allow cooling of the first hot crude synthesis gas collection stream in indirect heat exchange against a stream of water as a coolant, means for introducing the first hot crude synthesis gas collection stream into the waste heat boiler,
(h) means for discharging a cooled crude synthesis gas collection stream and a first steam stream from the waste heat boiler,
(i) means for feeding the cooled crude synthesis gas collection stream to at least one further purification, conditioning or processing step,
(j) a fixed bed catalytic reactor comprising at least one catalyst bed containing a solid particulate reforming catalyst, the fixed bed catalytic reactor being disposed inside the crude synthesis gas manifold and wherein the at least one catalyst bed is in indirect heat exchange relationship with the first hot crude synthesis gas collection stream, means for supplying the second superheated feed gas partial stream to the fixed bed catalytic reactor, and
(k) means for discharging a second hot crude synthesis gas collection stream from the fixed bed catalytic reactor and means for introducing the second hot crude synthesis gas collection stream into the waste heat boiler along with or combined with the first hot crude synthesis gas collection stream.

The plant for producing the synthesis gas product according to the present disclosure is of advantage in that the plant does not require an additional plot space for the fixed bed catalytic reactor to exchange heat for reforming reaction as the fixed bed catalytic reactor with the at least one catalyst bed is disposed inside the crude synthesis gas manifold. Consequently, the capital expenditure for the plant is reduced and also a risk of loss of containment in case of rupture due to metal dusting is avoided. Further, the at least one catalyst bed is in the indirect heat exchange relationship with the first hot crude synthesis gas collection stream, thereby waste heat available in the plant to generate steam is used for reforming reaction in the fixed bed catalytic reactor. The plant may be used either for debottlenecking hydrogen capacity of an existing plant without increasing steam co-production or design a new plant more efficiently.

Embodiments of the present disclosure eliminate the aforementioned drawbacks in existing known approaches for producing synthesis gas product with reduced steam co-production. The advantage of the embodiments according to the present disclosure in that the embodiments use the crude synthesis gas manifold to install the fixed bed catalytic reactor with the at least one catalyst bed where a part of a feed is diverted to carry out reforming reaction utilizing heat from the reformed gas, thereby reducing investment costs for additional hardware (exchange surface area, transfer line etc.) and steam co-production.

Additional aspects, advantages, features and objects of the present disclosure are made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, the same elements have been indicated by identical numbers. Embodiments of the present disclosure will now be described, by way of example only, with reference to the following diagrams wherein:
FIG. 1 is a block diagram of a plant for producing a synthesis gas product containing hydrogen and carbon oxides from a feed gas according to an embodiment of the present disclosure;
FIG. 2 is a schematic illustration of a crude synthesis gas manifold in fluid connection with a plurality of reformer tubes and a waste heat boiler according to an embodiment of the present disclosure;
FIG. 3 is a schematic illustration of a crude synthesis gas manifold comprising a fixed bed catalytic reactor with a plurality of tubes that are welded on one or more ring lines according to an embodiment of the present disclosure;
FIG. 4 is a schematic illustration of a crude synthesis gas manifold comprising a fixed bed catalytic reactor with a plurality of tubes that are welded on tube sheets of the crude synthesis gas manifold according to an embodiment of the present disclosure; and
FIGS. 5A-5D are flowcharts illustrating a method for producing a synthesis gas product containing hydrogen and carbon oxides from a feed gas according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

As used herein, several terms are defined below:
The term "synthesis gas product" is to be understood as meaning a fuel gas mixture consisting of hydrogen (H₂) and carbon monoxide (CO) as primary components along with few disruptive components, e. g. carbon dioxide (CO₂), hydrogen sulfide (H₂S), carbonyl sulfide (COS) and hydrogen cyanide (HCN).

Steam reforming process is a most common process used to produce the synthesis gas product. The reaction is represented by this equilibrium:

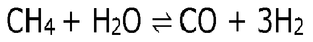

The term "feed gas" is to be understood as meaning a feedstock or a raw material used to produce a synthesis gas product.

The term "desulfurized form" is to be understood as meaning a feed gas that is depleted in sulfur components.

The term "steam reforming inlet temperature" is to be understood as meaning a temperature typically up to 650 degrees Celsius (°C), that is suitable to carry out steam reforming reaction.

The term "superheated feed gas stream" is to be understood as meaning a feed gas stream that is heated to the steam reforming inlet temperature.

The term "splitting" is to be understood as meaning a process that separates the feed gas stream in to one or more streams.

The term "first superheated feed gas partial stream" is to be understood as meaning a portion of the superheated feed gas stream.

The term "second superheated feed gas partial stream" is to be understood as meaning a portion of the superheated feed gas stream.

The term "feed gas individual streams" is to be understood as meaning gas streams that is separated or split from the superheated feed gas partial stream.

The term "crude synthesis gas individual streams" is to be understood as meaning a crude synthesis gas stream from each of a reformer tube.

The term "first hot crude synthesis gas collection stream" is to be understood as meaning a crude synthesis gas from a plurality of reformer tubes in a main reforming stage.

The term "second hot crude synthesis gas collection stream" is to be understood as meaning a crude synthesis gas from a plurality of reformer tubes in a fixed bed catalytic reactor.

The term "co-current" is to be understood as meaning flow of materials or streams in a same direction.

The term "counter-current" is to be understood as meaning flow of materials or streams in an opposite direction.

The term "longitudinal axis" is to be understood as meaning an axis along the lengthwise direction of the figure or body.

The further purification, conditioning or treatment step of the raw synthesis gas is understood to mean any measure or process step known from the prior art for producing pure synthesis gas, pure hydrogen and/or pure carbon monoxide. These include CO shift reaction for increasing the proportion of hydrogen in the synthesis gas, carbon dioxide separation by means of suitable scrubbing methods, such as, for example, low-temperature methanol scrubbing (Rectisol) or scrubbing with amine-containing scrubbing media, low-temperature gas fractionation for producing pure carbon monoxide, Pressure Swing Adsorption (PSA) for producing pure hydrogen, and physical process steps, such as, for example, cooling, condensation and separation of the condensate.

Optional or optionally means that the subsequently described event or circumstances may or may not occur. The description includes instances where the event or circumstance occurs and instances where it does not occur.

"Providing" in a claim is defined to mean furnishing, supplying, making available, or preparing something. The step may be performed by any actor in the absence of express language in the claim to the contrary.

According to a first aspect, the present disclosure provides a process for producing a synthesis gas product containing hydrogen and carbon oxides from a feed gas containing hydrocarbons, preferably natural gas or naphtha, comprising the following steps:
(a) providing the feed gas containing hydrocarbons, preferably in desulfurized form,
(b) introducing the feed gas into a feed gas superheater, heating the feed gas in the feed gas superheater to a steam reforming inlet temperature, discharging the feed gas heated to the steam reforming inlet temperature from the feed gas superheater as a superheated feed gas stream,
(c) splitting the superheated feed gas stream into a first superheated feed gas partial stream and a second superheated feed gas partial stream,
(d) introducing the first superheated feed gas partial stream into a main reforming stage comprising a plurality of reformer tubes filled with a solid particulate reforming catalyst, the plurality of reformer tubes being arranged in a reformer furnace whose interior is heated by means of a plurality of burners,
(e) splitting the first superheated feed gas partial stream into a plurality of feed gas individual streams, supplying one feed gas individual stream each to an inlet of a reformer tube,
(f) reacting the feed gas unit streams in the plurality of reformer tubes under first steam reforming conditions to form hydrogen, carbon oxides, and unreacted hydrocarbons-containing crude synthesis gas individual streams, wherein the first steam reforming conditions comprise adding steam to the hydrocarbons-containing feed gas and adjusting a first steam to carbon ratio,
(g) discharging the crude synthesis gas individual streams from the reformer tubes and introducing the crude synthesis gas individual streams into a crude synthesis gas manifold in fluid connection with the plurality of reformer tubes, thereby obtaining a first hot crude synthesis gas collection stream,
(h) introducing the first hot crude synthesis gas collection stream into a waste heat boiler in fluid connection with the crude synthesis gas manifold, cooling the first hot crude synthesis gas collection stream in the waste heat boiler in indirect heat exchange against a water stream as coolant,
(i) discharging a cooled crude synthesis gas collection stream and a first steam stream from the waste heat boiler,
(j) feeding the cooled crude synthesis gas collection stream to at least one further purification, conditioning or processing step,
(k) feeding the second superheated feed gas partial stream to a fixed bed catalytic reactor comprising at least one catalyst bed containing a solid particulate reforming catalyst, wherein the fixed bed catalytic reactor is disposed inside the crude synthesis gas manifold and wherein the at least one catalyst bed is in an indirect heat exchange relationship with the first hot crude synthesis gas collection stream,
(l) converting the second superheated feed gas partial stream in the fixed bed catalytic reactor under second steam reforming conditions to a second hot crude synthesis gas collection stream containing hydrogen, carbon oxides and unreacted hydrocarbons, and
(m) discharging the second hot crude synthesis gas collection stream from the fixed bed catalytic reactor and introducing the second hot crude synthesis gas collection stream into the waste heat boiler along with or combined with the first hot crude synthesis gas collection stream.

The process for producing the synthesis gas product according to the present disclosure is of advantage in that the process does not require an additional plot space for the fixed bed catalytic reactor to exchange heat for reforming reaction as the fixed bed catalytic reactor with the at least one catalyst bed is disposed inside the crude synthesis gas manifold. Consequently, the process reduces capital expenditure for the plant and avoids a risk of loss of containment in case of rupture due to metal dusting. Further, the at least one catalyst bed is in the indirect heat exchange relationship with the first hot crude synthesis gas collection stream, thereby waste heat available in the plant to generate steam is used for reforming reaction in the fixed bed catalytic reactor. The process may be used either for debottlenecking hydrogen capacity of an existing plant without increasing steam co-production or design a new plant more efficiently. The process advantageously improves overall thermal efficiency of the plant.

The feed gas may be natural gas, vaporized naphtha, petroleum gases like ethane or propane, vaporized refinery residues or any fluid or fluidized carbon or hydrocarbon containing feedstock.

The desulfurized form of the feed gas is produced by removing a proportion of sulfur in the feed gas, which acts as a catalyst poison for a catalyst present in the reformer tube. Desulfurization may be carried out on a pure adsorption basis, for example, via zinc oxide-based adsorbents. For some applications, preference is given to hydrodesulfurization (HDS), in which the sulfur bound in the organic and inorganic sulfur components is released in the form of hydrogen sulfide using hydrogen in the presence of a suitable catalyst and is subsequently bound to an adsorbent of the type described above. The desulfurization methods may be used in combination.

The steam reforming inlet temperature may include approximately 550-650 degrees Celsius (°C). The second hot crude synthesis gas collection stream combined with the first hot crude synthesis gas collection stream may include a temperature of 700 °C.

The solid particulate reforming catalyst used in the main reforming stage may include at least one of nickel-based catalyst, nickel-alumina catalyst, ruthenium-based catalyst, rhodium-based catalyst, palladium-based catalyst, iridium-based catalyst, or platinum-based catalyst.

The cooled crude synthesis gas collection stream may be subjected to Rectisol process, Purisol process, amine wash, nitrogen wash, cryogenic separation, sulfur removal or pressure swing adsorption (PSA) for purification, or any other synthesis gas purification method known from the art. The cooled crude synthesis gas collection stream may be subjected to produce a final product, e. g. hydrogen, ammonia, or methanol.

Optionally, the second superheated feed gas partial stream flows through the fixed bed catalytic reactor in co-current or counter-current relative to the first hot crude synthesis gas collection stream.

Optionally, the fixed-bed catalytic reactor is constructed as a tubular reactor with at least one, preferably a plurality of tubes, the plurality of tubes being filled with a solid, particulate reforming catalyst. The second superheated feed gas partial stream flows through the plurality of tubes in co-current or counter-current relative to the first hot crude synthesis gas collection stream. The plurality of tubes and the second superheated feed gas partial stream flowing through them are in an indirect heat exchange relationship with the first hot crude synthesis gas collection stream.

Optionally, the fixed bed catalytic reactor is constructed as a tubular reactor with a plurality of tubes. The plurality of tubes are arranged as a tube bundle inside the crude synthesis gas manifold. The plurality of tubes are spaced apart in the tube bundle to allow the first hot crude synthesis gas collection stream to flow around the plurality of tubes. Longitudinal axis of the tube bundle is parallel to or coincides with the longitudinal axis of the crude synthesis gas manifold.

Optionally, the tube bundle has an inlet side comprising inlet ends of the plurality of tubes. The inlet side of the tube bundle is connected to a tube end plate which is gas-tightly connected on its entire circumference to the inner wall of the crude synthesis gas manifold. The inlet ends of the plurality of tubes are passed through the tube end plate so that they are freely accessible for introducing the second superheated feed gas partial stream.

The solid particulate reforming catalyst used in the fixed bed catalytic reactor may include at least one of nickel-based catalyst, nickel-alumina catalyst, ruthenium-based catalyst, rhodium-based catalyst, palladium-based catalyst, iridium-based catalyst, or platinum-based catalyst.

Optionally, the second hot crude synthesis gas collection stream from the fixed bed catalytic reactor and the first hot crude synthesis gas collection stream from the main reforming stage mix at an outlet of the plurality of tubes in the fixed bed catalytic reactor.

Optionally, a second steam stream is added to the second superheated feed gas partial stream prior to its introduction into the fixed bed catalytic reactor to adjust a second steam to carbon ratio.

Optionally, the same type of solid particulate reforming catalyst is used in the main reforming stage and in the fixed bed catalytic reactor. Optionally, the plurality of tubes in the fixed bed catalytic reactor are configured according to at least one element selected from the following group: finned tubes, preferably with fins extending circularly around the entire circumference of the tube; tubes extending in a plane in an undulating or sinusoidal manner; tubes extending in a helical manner.

Optionally, the proportion of the second superheated feed gas partial stream to the superheated feed gas stream is between greater than zero and 25% by volume, preferably between 10% and 20% by volume.

Optionally, the reforming temperature in the plurality of reformer tubes in the main reforming stage is between 750 and 920 °C, preferably between 850 and 900 °C, and in that the reforming temperature in the plurality of tubes in the fixed bed catalytic reactor is between 800 and 910 °C.

Optionally, the first steam stream discharged from the waste heat boiler forms at least part of the total steam production of the process, the total steam production of the process being between 0 and 0.6 kg/m_{N}³, preferably between 0 and 0.3 kg/m_{N}³, calculated as kilogram (kg) of steam per standard cubic meter (m_{N}³) of hydrogen produced.

Optionally, the first steam stream discharged from the waste heat boiler used in reforming reaction in at least one of the main reforming stage or the fixed bed catalytic reactor. The first steam stream discharged from the waste heat boiler may be added to the second superheated feed gas partial stream prior to its introduction into the fixed bed catalytic reactor to adjust the second steam to carbon ratio.

According to a second aspect, the present disclosure provides a plant for producing a synthesis gas product containing hydrogen and carbon oxides from a hydrocarbon-containing feed gas, preferably natural gas or naphtha, comprising the following components in fluid connection with each other:
(a) means for providing the feed gas containing hydrocarbons, preferably in desulfurized form,
(b) a feed gas superheater, means for introducing the feed gas into the feed gas superheater, means for discharging the feed gas heated to a steam reforming inlet temperature from the feed gas superheater as a superheated feed gas stream,
(c) means for splitting the superheated feed gas stream into a first superheated feed gas partial stream and a second superheated feed gas partial stream,
(d) a main reforming stage comprising a plurality of reformer tubes filled with a solid particulate reforming catalyst, the plurality of reformer tubes being arranged in a reformer furnace whose interior is heated by means of a plurality of burners, means for introducing the first superheated feed gas partial stream into the main reforming stage,
(e) means for splitting the first superheated feed gas partial stream into a plurality of feed gas individual streams, means for supplying one feed gas individual stream each to an inlet of a reformer tube,
(f) means for discharging the crude synthesis gas individual streams from the plurality of reformer tubes and means for introducing the crude synthesis gas individual streams into a crude synthesis gas manifold in fluid connection with the plurality of reformer tubes, thereby obtaining a first hot crude synthesis gas collection stream,
(g) a waste heat boiler in fluid connection with the crude synthesis gas manifold and configured to allow cooling of the first hot crude synthesis gas collection stream in indirect heat exchange against a stream of water as a coolant, means for introducing the first hot crude synthesis gas collection stream into the waste heat boiler,
(h) means for discharging a cooled crude synthesis gas collection stream and a first steam stream from the waste heat boiler,
(i) means for feeding the cooled crude synthesis gas collection stream to at least one further purification, conditioning or processing step,
(j) a fixed bed catalytic reactor comprising at least one catalyst bed containing a solid particulate reforming catalyst, the fixed bed catalytic reactor being disposed inside the crude synthesis gas manifold and wherein the at least one catalyst bed is in indirect heat exchange relationship with the first hot crude synthesis gas collection stream, means for supplying the second superheated feed gas partial stream to the fixed bed catalytic reactor, and
(k) means for discharging a second hot crude synthesis gas collection stream from the fixed bed catalytic reactor and means for introducing the second hot crude synthesis gas collection stream into the waste heat boiler along with or combined with the first hot crude synthesis gas collection stream.

The plant for producing the synthesis gas product according to the present disclosure is of advantage in that the plant does not require an additional plot space for the fixed bed catalytic reactor to exchange heat for reforming reaction as the fixed bed catalytic reactor with the at least one catalyst bed is disposed inside the crude synthesis gas manifold. Consequently, the capital expenditure for the plant is reduced and also a risk of loss of containment in case of rupture due to metal dusting is avoided. Further, the at least one catalyst bed is in the indirect heat exchange relationship with the first hot crude synthesis gas collection stream, thereby waste heat available in the plant to generate steam is used for reforming reaction in the fixed bed catalytic reactor. The plant may be used either for debottlenecking hydrogen capacity of an existing plant without increasing steam co-production or design a new plant more efficiently.

The feed gas may be natural gas, vaporized naphtha, petroleum gases like ethane or propane, vaporized refinery residues or any fluid or fluidized carbon or hydrocarbon containing feedstock.

The steam reforming inlet temperature may include approximately 560-650 degrees Celsius (°C). The second hot crude synthesis gas collection stream combined with the first hot crude synthesis gas collection stream may include a temperature of 700 °C.

The solid particulate reforming catalyst used in the main reforming stage may include at least one of nickel-based catalyst, nickel-alumina catalyst, ruthenium-based catalyst, rhodium-based catalyst, palladium-based catalyst, iridium-based catalyst, or platinum-based catalyst.

The cooled crude synthesis gas collection stream may be subjected to Rectisol process, Purisol process, amine wash, nitrogen wash, cryogenic separation, sulfur removal or pressure swing adsorption (PSA) for purification, or any other synthesis gas purification method known from the art. The cooled crude synthesis gas collection stream may be subjected to produce a final product, e. g. hydrogen, ammonia, or methanol.

Optionally, the fixed-bed catalytic reactor is designed and arranged inside the crude synthesis gas manifold such that the second superheated feed gas partial stream flows through the fixed-bed catalytic reactor in co-current or counter-current relative to the first hot crude synthesis gas collection stream.

Optionally, the fixed bed catalytic reactor is constructed as a tubular reactor with at least one, preferably a plurality of tubes, the plurality of tubes being filled with a solid, particulate reforming catalyst. The second superheated feed gas partial stream is enabled to flow through the plurality of tubes in co-current or counter-current relative to the first hot crude synthesis gas collection stream, and wherein the plurality of tubes and the second superheated feed gas partial stream flowing through them are in an indirect heat exchange relationship with the first hot crude synthesis gas collection stream.

Optionally, the fixed bed catalytic reactor is constructed as a tubular reactor with a plurality of tubes. The plurality of tubes are arranged as a tube bundle inside the crude synthesis gas manifold. The plurality of tubes are spaced apart in the tube bundle to allow the first hot crude synthesis gas collection stream to flow around the plurality of tubes. Longitudinal axis of the tube bundle is parallel to or coincides with the longitudinal axis of the crude synthesis gas manifold.

Optionally, the tube bundle has an inlet side comprising inlet ends of the plurality of tubes. The inlet side of the tube bundle is connected to a tube end plate which is gas-tightly connected on its entire circumference to the inner wall of the crude synthesis gas manifold. The inlet ends of the plurality of tubes are passed through the tube end plate so as to be freely accessible for introducing the second superheated feed gas partial stream.

The solid particulate reforming catalyst used in the fixed bed catalytic reactor may include at least one of nickel-based catalyst, nickel-alumina catalyst, ruthenium-based catalyst, rhodium-based catalyst, palladium-based catalyst, iridium-based catalyst, or platinum-based catalyst.

Optionally, the second hot crude synthesis gas collection stream from the fixed bed catalytic reactor and the first hot crude synthesis gas collection stream from the main reforming stage mix at an outlet of the plurality of tubes in the fixed bed catalytic reactor.

Optionally, the plant further comprising means for allowing a second steam stream to be added to the second superheated feed gas partial stream prior to its introduction into the fixed bed catalytic reactor to adjust a second steam to carbon ratio.

Optionally, the plurality of tubes in the fixed bed catalytic reactor are configured according to at least one element selected from the following group: finned tubes, preferably with fins extending circularly around the entire circumference of the tube; tubes extending in a plane in an undulating or sinusoidal manner; tubes extending in a helical manner.

Optionally, the proportion of the second superheated feed gas partial stream to the superheated feed gas stream is between greater than zero and 25% by volume, preferably between 10% and 20% by volume.

Optionally, the reforming temperature in the plurality of reformer tubes in the main reforming stage is between 750 and 920 °C, preferably between 850 and 900 °C, and in that the reforming temperature in the plurality of tubes in the fixed bed catalytic reactor is between 800 and 910 °C.

Optionally, the first steam stream discharged from the waste heat boiler forms at least part of the total steam production of the process, the total steam production of the process being between 0 and 0.6 kg/m_{N}³, preferably between 0 and 0.3 kg/m_{N}³, calculated as kilogram (kg) of steam per standard cubic meter (m_{N}³) of hydrogen produced.

Optionally, the first steam stream discharged from the waste heat boiler used in reforming reaction in at least one of the main reforming stage or the fixed bed catalytic reactor. The first steam stream discharged from the waste heat boiler may be added to the second superheated feed gas partial stream prior to its introduction into the fixed bed catalytic reactor to adjust the second steam to carbon ratio.

Embodiments of the present disclosure substantially eliminate or at least partially address the aforementioned technical drawbacks in existing technologies for producing synthesis gas product with reduced steam co-production by using the crude synthesis gas manifold to install the fixed bed catalytic reactor where a part of a feed is diverted to carry out reforming reaction utilizing heat from the reformed gas.

### DETAILED DESCRIPTION OF THE DRAWINGS

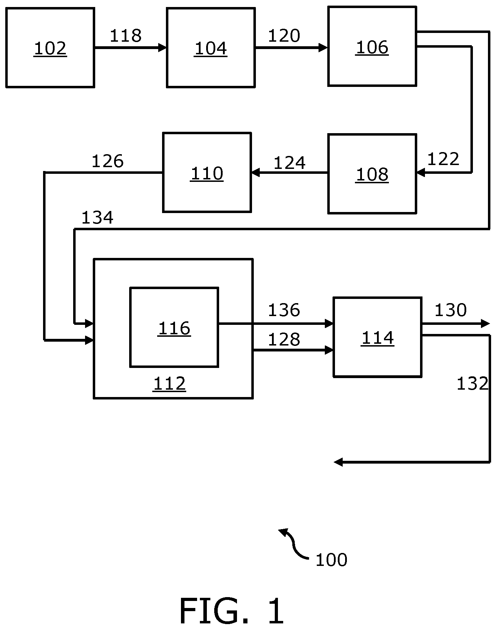

**FIG. 1** is a block diagram of a plant **100** for producing a synthesis gas product containing hydrogen and carbon oxides from a feed gas according to an embodiment of the present disclosure. The plant **100** includes a feed gas providing means **102,** a feed gas superheater **104,** a splitting means **106,** a splitting means **108,** a main reforming stage that includes a reformer furnace **110,** a crude synthesis gas manifold **112,** a waste heat boiler **114,** and a fixed bed catalytic reactor **116.** The feed gas providing means **102** is configured to provide the feed gas containing hydrocarbons, preferably in desulfurized form via means **118** to the feed gas superheater **104.** The feed gas superheater **104** is configured to heat the feed gas to a steam reforming inlet temperature and discharge the feed gas heated to the steam reforming inlet temperature via means **120** as a superheated feed gas stream. The splitting means **106** is configured to split the superheated feed gas stream into a first superheated feed gas partial stream and a second superheated feed gas partial stream. The reformer furnace **110** includes a plurality of reformer tubes filled with a solid particulate reforming catalyst, whose interior is heated by means of a plurality of burners. The first superheated feed gas partial stream is introduced into the splitting means **108** via means **122.** The splitting means **108** is configured to split the first superheated feed gas partial stream into a plurality of feed gas individual streams and supply one feed gas individual stream each to an inlet of a reformer tube via means **124.** The plurality of reformer tubes in the reformer furnace **110** are configured to react the feed gas unit streams in the plurality of reformer tubes under first steam reforming conditions to form hydrogen, carbon oxides, and unreacted hydrocarbons-containing crude synthesis gas individual streams. The steam reforming conditions comprise adding steam to the hydrocarbons-containing feed gas and adjusting a first steam to carbon ratio. The plurality of reformer tubes are further configured to discharge the crude synthesis gas individual streams from the plurality of reformer tubes and introduce the crude synthesis gas individual streams into a crude synthesis gas manifold **112** in fluid connection with the plurality of reformer tubes via means **126,** thereby obtaining a first hot crude synthesis gas collection stream. The waste heat boiler **114** is in fluid connection with the crude synthesis gas manifold **112.** The waste heat boiler **114** is configured to receive the first hot crude synthesis gas collection stream via means **128** and is configured to allow cooling of the first hot crude synthesis gas collection stream in indirect heat exchange against a stream of water as a coolant. The waste heat boiler **114** is further configured to discharge a cooled crude synthesis gas collection stream and a first steam stream via means **130,** and **132** respectively. The plant **100** further comprises means for feeding the cooled crude synthesis gas collection stream to at least one further purification, conditioning or processing step.

The fixed bed catalytic reactor **116** comprising at least one catalyst bed containing a solid particulate reforming catalyst. The fixed bed catalytic reactor **116** is disposed inside the crude synthesis gas manifold **112.** The at least one catalyst bed is in indirect heat exchange relationship with the first hot crude synthesis gas collection stream. The fixed bed catalytic reactor **116** is configured to receive the second superheated feed gas partial stream via means **134** and convert the second superheated feed gas partial stream under second steam reforming conditions to a second hot crude synthesis gas collection stream containing hydrogen, carbon oxides and unreacted hydrocarbons. The fixed-bed catalytic reactor **116** is designed and arranged inside the crude synthesis gas manifold **112** such that the second superheated feed gas partial stream flows through the fixed-bed catalytic reactor **116** in co-current or counter-current relative to the first hot crude synthesis gas collection stream. The fixed-bed catalytic reactor **116** may be constructed as a tubular reactor with at least one, preferably a plurality of tubes filled with a solid, particulate reforming catalyst. The plurality of tubes may be arranged as a tube bundle inside the crude synthesis gas manifold **112.**

The fixed bed catalytic reactor **116** is further configured to discharge the second hot crude synthesis gas collection stream and introduce the second hot crude synthesis gas collection stream to the waste heat boiler **114** along with or combined with the first hot crude synthesis gas collection stream via means **136.**

The fixed bed catalytic reactor **116** may be configured according to at least one element selected from the following group: finned tubes, preferably with fins extending circularly around the entire circumference of the tube; tubes extending in a plane in an undulating or sinusoidal manner; tubes extending in a helical manner.

The plant **100** may comprise means (not shown in **FIG. 1**) for allowing a second steam stream to be added to the second superheated feed gas partial stream prior to its introduction into the fixed bed catalytic reactor **116** to adjust a second steam to carbon ratio.

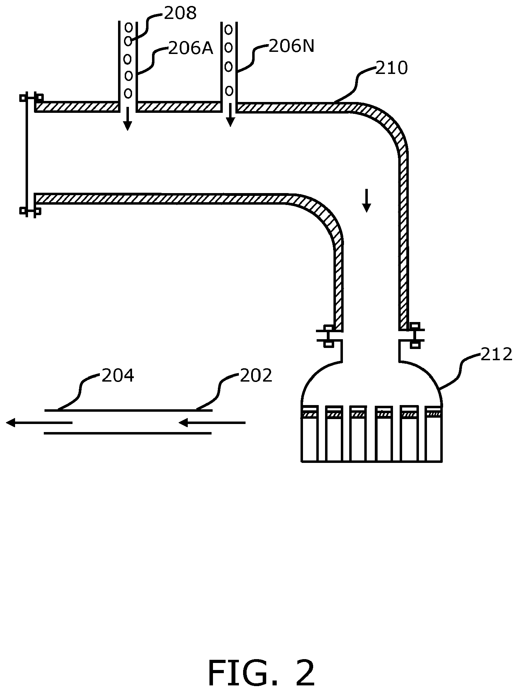

**FIG. 2** is a schematic illustration of a crude synthesis gas manifold **210** in fluid connection with a plurality of reformer tubes **206A-N** and a waste heat boiler **212** according to an embodiment of the present disclosure. The plurality of reformer tubes **206A-N** are connected to refractory lined outlet manifolds situated exactly below each reformer tube row of a reformer furnace. These individual outlet manifolds are connected to the crude synthesis gas manifold **210.** The plurality of reformer tubes **206A-N** are filled with a solid particulate reforming catalyst **208.** A superheated feed gas stream from a feed gas superheater is split into a first superheated feed gas partial stream and a second superheated feed gas partial stream. The superheated feed gas stream is received via means **202** from the feed gas superheater. The first superheated feed gas partial stream received via means **204** is split by a splitting means (not shown in **FIG. 2**) into a plurality of feed gas individual streams. The plurality of reformer tubes **206A-N** are configured to receive one feed gas individual stream each and react the feed gas individual streams under first steam reforming conditions to form hydrogen, carbon oxides, and unreacted hydrocarbons-containing crude synthesis gas individual streams.

The crude synthesis gas manifold **210** is configured to receive the crude synthesis gas individual streams from the plurality of reformer tubes **206A-N**, thereby obtaining a first hot crude synthesis gas collection stream. The crude synthesis gas manifold **210** is further configured to introduce the first hot crude synthesis gas collection stream into the waste heat boiler **212** in fluid connection with the crude synthesis gas manifold **210.** The waste heat boiler **212** is configured to cool the first hot crude synthesis gas collection stream in indirect heat exchange against a water stream as coolant and discharge a cooled crude synthesis gas collection stream and a first steam stream. The cooled crude synthesis gas collection stream may be directed to at least one further purification, conditioning or processing step.

The crude synthesis gas manifold **210** is used to install a fixed bed catalytic reactor (not shown in **FIG. 2**) where the second superheated feed gas partial stream is converted into a second hot crude synthesis gas collection stream containing hydrogen, carbon oxides and unreacted hydrocarbons by utilizing heat from the first hot crude synthesis gas collection stream.

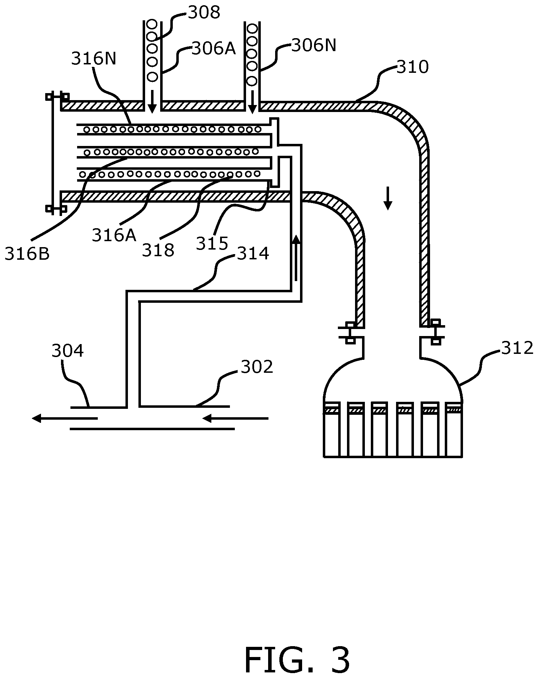

**FIG. 3** is a schematic illustration of a crude synthesis gas manifold **310** comprising a fixed bed catalytic reactor **315** with a plurality of tubes **316A-N** that are welded on one or more ring lines according to an embodiment of the present disclosure. The crude synthesis gas manifold **310** is in fluid connection with a plurality of reformer tubes **306A-N** and a waste heat boiler **312.** The plurality of reformer tubes **306A-N** are filled with a solid particulate reforming catalyst **308.** A superheated feed gas stream from a feed gas superheater is split into a first superheated feed gas partial stream and a second superheated feed gas partial stream. The superheated feed gas stream is received via means **302** from the feed gas superheater. The first superheated feed gas partial stream received via means **304** is split by a splitting means (not shown in **FIG. 3**) into a plurality of feed gas individual streams. The plurality of reformer tubes **306A-N** are configured to receive one feed gas individual stream each and react the feed gas individual streams under first steam reforming conditions to form hydrogen, carbon oxides, and unreacted hydrocarbons-containing crude synthesis gas individual streams. The fixed-bed catalytic reactor **315** is designed and arranged inside the crude synthesis gas manifold **310** such that the second superheated feed gas partial stream flows through the fixed-bed catalytic reactor **315** in co-current or counter-current relative to a first hot crude synthesis gas collection stream. The means **314** supplies the second superheated feed gas partial stream to the fixed bed catalytic reactor **315**. The fixed bed catalytic reactor **315** is configured to convert the second superheated feed gas partial stream under second steam reforming conditions to a second hot crude synthesis gas collection stream containing hydrogen, carbon oxides and unreacted hydrocarbons.

The fixed-bed catalytic reactor **315** is constructed as a tubular reactor with at least one, preferably a plurality of tubes **316A-N**, the plurality of tubes **316A-N** being filled with a solid particulate reforming catalyst **318.** The second superheated feed gas partial stream is enabled to flow through the plurality of tubes **316A-N** in co-current or counter-current relative to the first hot crude synthesis gas collection stream. The plurality of tubes **316A-N** and the second superheated feed gas partial stream flowing through them are in an indirect heat exchange relationship with the first hot crude synthesis gas collection stream. The fixed bed catalytic reactor **315** is constructed as a tubular reactor with the plurality of tubes **316A-N.** The plurality of tubes **316A-N** are arranged as a tube bundle inside the crude synthesis gas manifold **310.** The plurality of tubes **316A-N** are spaced apart in the tube bundle to allow the first hot crude synthesis gas collection stream to flow around the plurality of tubes **316A-N.** Longitudinal axis of the tube bundle is parallel to or coincides with longitudinal axis of the crude synthesis gas manifold **310.** The tube bundle has an inlet side comprising the inlet ends of the plurality of tubes **316A-N.** The inlet side of the tube bundle is connected to a tube end plate which is gas-tightly connected on its entire circumference to the inner wall of the crude synthesis gas manifold **310.** The inlet ends of the plurality of tubes **316A-N** are passed through the tube end plate so as to be freely accessible for introducing the second superheated feed gas partial stream.

The waste heat boiler **312** is configured to receive the second hot crude synthesis gas collection stream from the fixed bed catalytic reactor **315** along with or combined with the first hot crude synthesis gas collection stream. The waste heat boiler **312** is further configured to cool the second hot crude synthesis gas collection stream along with or combined with the first hot crude synthesis gas collection stream in indirect heat exchange against a water stream as coolant and discharge a cooled crude synthesis gas collection stream for least one purification, conditioning or processing step.

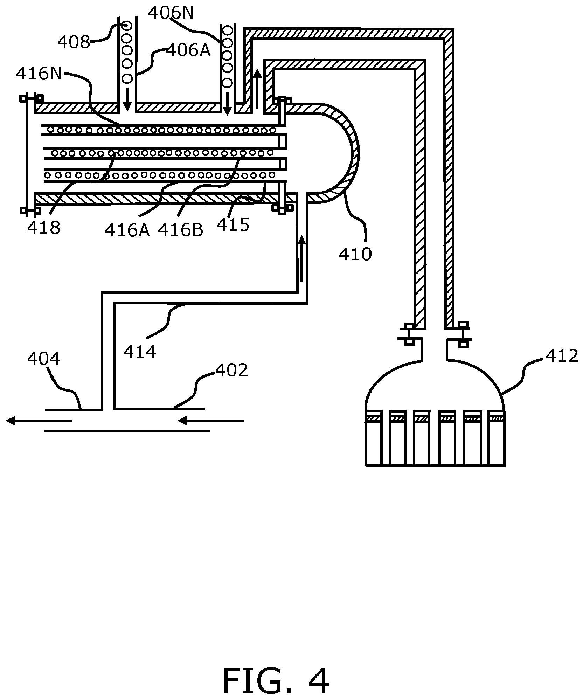

**FIG. 4** is a schematic illustration of a crude synthesis gas manifold **410** comprising a fixed bed catalytic reactor **415** with a plurality of tubes **416A-N** that are welded on tube sheets of the crude synthesis gas manifold **410** according to an embodiment of the present disclosure. The crude synthesis gas manifold **410** is in fluid connection with a plurality of reformer tubes **406A-N** and a waste heat boiler **412.** The plurality of reformer tubes **406A-N** are filled with a solid particulate reforming catalyst **408.** A superheated feed gas stream from a feed gas superheater is split into a first superheated feed gas partial stream and a second superheated feed gas partial stream. The superheated feed gas stream is received via means **402** from the feed gas superheater. The first superheated feed gas partial stream received via means **404** is split by a splitting means (not shown in **FIG. 4**) into a plurality of feed gas individual streams. The plurality of reformer tubes **406A-N** are configured to receive one feed gas individual stream each and react the feed gas individual streams under first steam reforming conditions to form hydrogen, carbon oxides, and unreacted hydrocarbons-containing crude synthesis gas individual streams. The fixed-bed catalytic reactor **415** is designed and arranged inside the crude synthesis gas manifold **410** such that the second superheated feed gas partial stream flows through the fixed-bed catalytic reactor **415** in co-current or counter-current relative to a first hot crude synthesis gas collection stream. The means **414** supplies the second superheated feed gas partial stream to the fixed bed catalytic reactor **415.** The fixed bed catalytic reactor **415** is configured to convert the second superheated feed gas partial stream under second steam reforming conditions to a second hot crude synthesis gas collection stream containing hydrogen, carbon oxides and unreacted hydrocarbons.

The fixed-bed catalytic reactor **415** is constructed as a tubular reactor with at least one, preferably a plurality of tubes **416A-N**, the plurality of tubes **416A-N** being filled with a solid particulate reforming catalyst **418.** The second superheated feed gas partial stream is enabled to flow through the plurality of tubes **416A-N** in co-current or counter-current relative to the first hot crude synthesis gas collection stream. The plurality of tubes **416A-N** and the second superheated feed gas partial stream flowing through them are in an indirect heat exchange relationship with the first hot crude synthesis gas collection stream.

The fixed bed catalytic reactor **415** is constructed as a tubular reactor with the plurality of tubes **416A-N.** The plurality of tubes **416A-N** are arranged as a tube bundle inside the crude synthesis gas manifold **410.** The plurality of tubes **416A-N** are spaced apart in the tube bundle to allow the first hot crude synthesis gas collection stream to flow around the plurality of tubes **416A-N.** Longitudinal axis of the tube bundle is parallel to or coincides with longitudinal axis of the crude synthesis gas manifold **410.** The tube bundle has an inlet side comprising the inlet ends of the plurality of tubes **416A-N.** The inlet side of the tube bundle is connected to a tube end plate which is gas-tightly connected on its entire circumference to the inner wall of the crude synthesis gas manifold **410.** The inlet ends of the plurality of tubes **416A-N** are passed through the tube end plate so as to be freely accessible for introducing the second superheated feed gas partial stream.

The waste heat boiler **412** is configured to receive the second hot crude synthesis gas collection stream from the fixed bed catalytic reactor **415** along with or combined with the first hot crude synthesis gas collection stream. The waste heat boiler **412** is configured to receive the second hot crude synthesis gas collection stream from the fixed bed catalytic reactor **415** along with or combined with the first hot crude synthesis gas collection stream. The waste heat boiler **412** is further configured to cool the second hot crude synthesis gas collection stream along with or combined with the first hot crude synthesis gas collection stream in indirect heat exchange against a water stream as coolant and discharge a cooled crude synthesis gas collection stream for least one purification, conditioning or processing step.

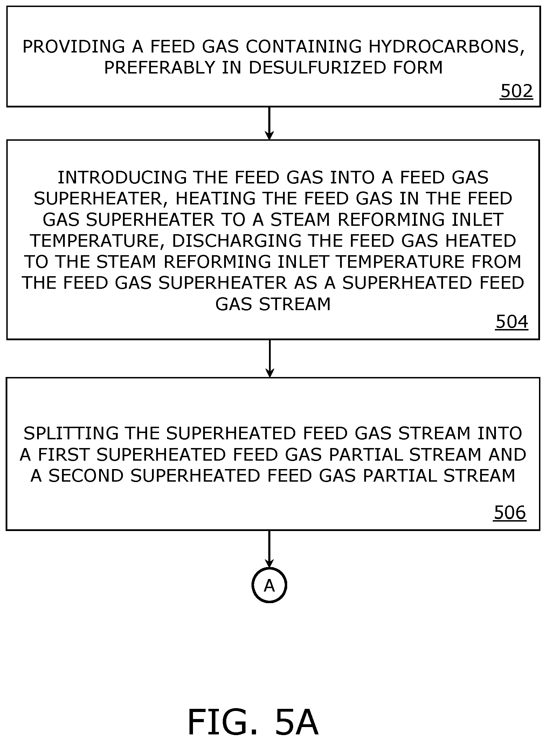

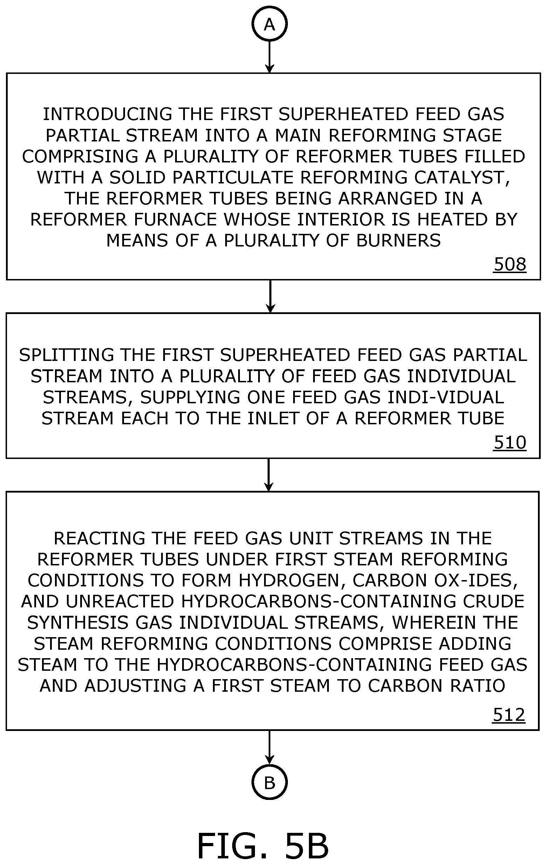

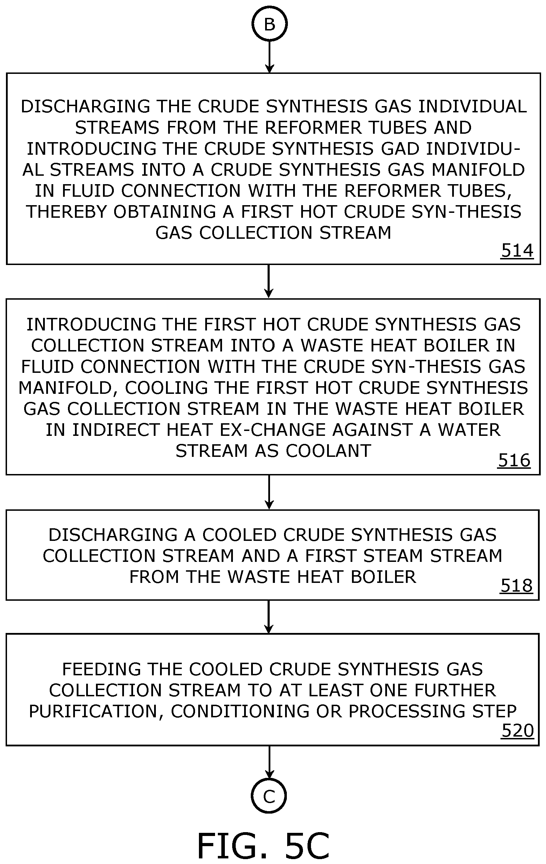

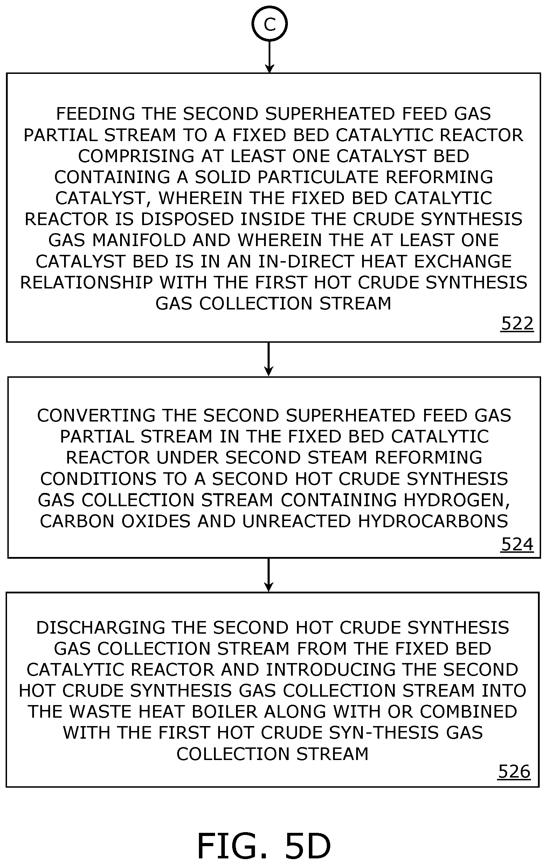

**FIGS. 5A-5D** are flowcharts illustrating a method for producing a synthesis gas product containing hydrogen and carbon oxides from a feed gas according to an embodiment of the present disclosure. At a step **502**, the feed gas containing hydrocarbons, preferably in desulfurized form, is provided. At a step **504**, the feed gas is introduced into a feed gas superheater, thereafter the feed gas is heated in the feed gas superheater to a steam reforming inlet temperature, and the feed gas heated to the steam reforming inlet temperature is discharged from the feed gas superheater as a superheated feed gas stream. At a step **506**, the superheated feed gas stream is split into a first superheated feed gas partial stream and a second superheated feed gas partial stream. At a step **508**, the first superheated feed gas partial stream is introduced into a main reforming stage comprising a plurality of reformer tubes filled with a solid particulate reforming catalyst, the plurality of reformer tubes being arranged in a reformer furnace whose interior is heated by means of a plurality of burners. At a step **510**, the first superheated feed gas partial stream is split into a plurality of feed gas individual streams, thereafter one feed gas individual stream each is supplied to an inlet of a reformer tube. At a step **512**, the feed gas unit streams are reacted in the plurality of reformer under first steam reforming conditions to form hydrogen, carbon oxides, and unreacted hydrocarbons-containing crude synthesis gas individual streams. The steam reforming conditions include adding steam to the hydrocarbons-containing feed gas and adjusting a first steam to carbon ratio. At a step **514**, the crude synthesis gas individual streams are discharged from the reformer tubes, thereafter the crude synthesis gas individual streams are introduced into a crude synthesis gas manifold in fluid connection with the plurality of reformer tubes, thereby obtaining a first hot crude synthesis gas collection stream. At a step **516**, the first hot crude synthesis gas collection stream is introduced into a waste heat boiler in fluid connection with the crude synthesis gas manifold, thereafter the first hot crude synthesis gas collection stream is cooled in the waste heat boiler in indirect heat exchange against a water stream as coolant. At a step **518**, a cooled crude synthesis gas collection stream and a first steam stream are discharged from the waste heat boiler. At a step **520**, the cooled crude synthesis gas collection stream is fed to at least one further purification, conditioning or processing step. At a step **522**, the second superheated feed gas partial stream is fed to a fixed bed catalytic reactor comprising at least one catalyst bed containing a solid particulate reforming catalyst. The fixed bed catalytic reactor is disposed inside the crude synthesis gas manifold. The at least one catalyst bed is in an indirect heat exchange relationship with the first hot crude synthesis gas collection stream. At a step **524**, the second superheated feed gas partial stream is converted in the fixed bed catalytic reactor under second steam reforming conditions to a second hot crude synthesis gas collection stream containing hydrogen, carbon oxides and unreacted hydrocarbons. At a step **526**, the second hot crude synthesis gas collection stream is discharged from the fixed bed catalytic reactor, thereafter the second hot crude synthesis gas collection stream is introduced into the waste heat boiler along with or combined with the first hot crude synthesis gas collection stream.

Steam reforming conditions, e. g. first and second steam reforming conditions, are known to those skilled in the art from the prior art, for example the documents discussed at the outset. These are the physicochemical conditions under which a measurable, preferably industrially relevant, conversion of hydrocarbons to synthesis gas products is achieved. Important parameters include adjustment of a suitable steam reforming entry temperature of typically about 1000°C and addition of steam to input gas containing hydrocarbons and thus adjustment of a steam/carbon ratio (S/C ratio). Typical values for the S/C ratio are between 1.5 and 3.5 mole/mole (mol/mol). Necessary adjustments of these conditions to the respective operational requirements will be made by those skilled in the art on the basis of routine experiments. Any specific reaction conditions disclosed may serve here as a guide, but they should not be regarded as limiting in relation to the scope of the invention.

Pressures, if any, are reported in absolute pressure units, bara for short, or in gauge pressure units, barg for short, unless otherwise stated in the particular individual con-text.

A fluid connection between two regions of an apparatus or a plant according to the invention is to be understood as meaning any type of connection whatsoever which makes it possible for a fluid, for example a gas stream, to flow from one to the other of the two regions, neglecting any interposed regions or components. In particular a direct fluid connection is to be understood as meaning any type of connection whatsoever which makes it possible for a fluid, for example a gas stream, to flow directly from one to the other of the two regions, wherein no further regions or components are interposed with the exception of purely transportational operations and the means required there-for, for example pipelines, valves, pumps, compressors, reservoirs. One example would be a pipeline leading directly from one to the other of the two regions.

A means is to be understood as meaning something that enables or is helpful in the achievement of a goal. In particular, means for performing a particular process step are to be understood as meaning any physical articles that would be considered by a per-son skilled in the art in order to be able to perform this process step. For example, a per-son skilled in the art will consider means of introducing or discharging a material stream to include any transporting and conveying apparatuses, i.e., for example pipelines, pumps, compressors, valves, which seem necessary or sensible to said skilled person for performance of this process step on the basis of his knowledge of the art.

For the purposes of this description steam is to be understood as being synonymous with water vapor unless the opposite is indicated in an individual case. By contrast, the term "water" refers to water in the liquid state of matter unless otherwise stated in an individual case.

Heat exchange relationship is to be understood as meaning the possibility of heat exchange or heat transfer between two regions of the apparatus or plant according to the invention for example, wherein any mechanisms of heat exchange or heat transfer such as heat conduction, heat radiation or convective heat transport may come into effect. An indirect heat exchange relationship is especially to be understood as meaning the type of heat exchange or heat transfer which is carried out through a wall (so-called heat transit) which comprises the stages of heat transfer from fluid 1 to the surface of the wall, heat conduction through the wall and heat transfer from the surface of the wall to fluid 2.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### LIST OF REFERENCE NUMERALS

100 - Plant
102 - Feed gas providing means
104 - Feed gas superheater
106 - Splitting means
108 - Splitting means
110 - Reformer furnace
112, 210, 310, 410 - Crude synthesis gas manifold
114, 212, 312, 412 - Waste heat boiler
116, 315, 415, - Fixed bed catalytic reactor
118 -136 - Means
202, 204, 302, 304, 314, 414 - Means
206A-N, 306A-N, 406A-N - Plurality of reformer tubes
208, 308, 408 - Solid particulate reforming catalyst
316A-N, 416A-N - Plurality of tubes
318, 418 - Solid particulate reforming catalyst

## Claims

1. Process for producing a synthesis gas product containing hydrogen and carbon oxides from a feed gas containing hydrocarbons, preferably natural gas or naphtha, comprising the following steps:
(a) providing the feed gas containing hydrocarbons, preferably in desulfurized form,
(b) introducing the feed gas into a feed gas superheater (104), heating the feed gas in the feed gas superheater (104) to a steam reforming inlet temperature, discharging the feed gas heated to the steam reforming inlet temperature from the feed gas superheater (104) as a superheated feed gas stream,
(c) splitting the superheated feed gas stream into a first superheated feed gas partial stream and a second superheated feed gas partial stream,
(d) introducing the first superheated feed gas partial stream into a main reforming stage comprising a plurality of reformer tubes (206AN, 306A-N, 406A-N) filled with a solid particulate reforming catalyst (208, 308, 408), the plurality of reformer tubes (206A-N, 306A-N, 406A-N) being arranged in a reformer furnace (110) whose interior is heated by means of a plurality of burners,
(e) splitting the first superheated feed gas partial stream into a plurality of feed gas individual streams, supplying one feed gas individual stream each to an inlet of a reformer tube (206A-N, 306AN, 406A-N),
(f) reacting the feed gas unit streams in the plurality of reformer tubes (206A-N, 306A-N, 406A-N) under first steam reforming conditions to form hydrogen, carbon oxides, and unreacted hydrocarbons-containing crude synthesis gas individual streams, wherein the first steam reforming conditions comprise adding steam to the hydrocarbons-containing feed gas and adjusting a first steam to carbon ratio,
(g) discharging the crude synthesis gas individual streams from the reformer tubes (206A-N, 306A-N, 406A-N) and introducing the crude synthesis gas individual streams into a crude synthesis gas manifold (112, 210, 310, 410) in fluid connection with the plurality of reformer tubes (206A-N, 306A-N, 406A-N), thereby obtaining a first hot crude synthesis gas collection stream,
(h) introducing the first hot crude synthesis gas collection stream into a waste heat boiler (114, 212, 312, 412) in fluid connection with the crude synthesis gas manifold (112, 210, 310, 410), cooling the first hot crude synthesis gas collection stream in the waste heat boiler (114, 212, 312, 412) in indirect heat exchange against a water stream as coolant,
(i) discharging a cooled crude synthesis gas collection stream and a first steam stream from the waste heat boiler (114, 212, 312, 412),
(j) feeding the cooled crude synthesis gas collection stream to at least one further purification, conditioning or processing step,
(k) feeding the second superheated feed gas partial stream to a fixed bed catalytic reactor (116, 315, 415) comprising at least one catalyst bed containing a solid particulate reforming catalyst (318, 418), wherein the fixed bed catalytic reactor (116, 315, 415) is disposed inside the crude synthesis gas manifold (112, 210, 310, 410) and wherein the at least one catalyst bed is in an indirect heat exchange relationship with the first hot crude synthesis gas collection stream,
(l) converting the second superheated feed gas partial stream in the fixed bed catalytic reactor (116, 315, 415) under second steam reforming conditions to a second hot crude synthesis gas collection stream containing hydrogen, carbon oxides and unreacted hydrocarbons, and
(m) discharging the second hot crude synthesis gas collection stream from the fixed bed catalytic reactor (116, 315, 415) and introducing the second hot crude synthesis gas collection stream into the waste heat boiler (114, 212, 312, 412) along with or combined with the first hot crude synthesis gas collection stream.

2. Process according to claim 1, **characterized in that** the second superheated feed gas partial stream flows through the fixed bed catalytic reactor (116, 315, 415) in co-current or counter-current relative to the first hot crude synthesis gas collection stream.

3. Process according to claim 1 or 2, **characterized in that** the fixed-bed catalytic reactor (116, 315, 415) is constructed as a tubular reactor with at least one, preferably a plurality of tubes (316A-N, 416A-N), the plurality of tubes (316A-N, 416A-N) being filled with a solid, particulate reforming catalyst (318, 418), wherein the second superheated feed gas partial stream flows through the plurality of tubes (316A-N, 416AN) in co-current or counter-current relative to the first hot crude synthesis gas collection stream, and wherein the plurality of tubes (316A-N, 416A-N) and the second superheated feed gas partial stream flowing through them are in an indirect heat exchange relationship with the first hot crude synthesis gas collection stream.

4. Process according to claim 3, **characterized in that** the fixed bed catalytic reactor (116, 315, 415) is constructed as a tubular reactor with a plurality of tubes (316A-N, 416A-N), wherein the plurality of tubes (316A-N, 416A-N) are arranged as a tube bundle inside the crude synthesis gas manifold (112, 210, 310, 410), wherein the plurality of tubes (316A-N, 416A-N) are spaced apart in the tube bundle to allow the first hot crude synthesis gas collection stream to flow around the plurality of tubes (316A-N, 416A-N), and wherein longitudinal axis of the tube bundle is parallel to or coincides with the longitudinal axis of the crude synthesis gas manifold (112, 210, 310, 410).

5. Process of claim 4, **characterized in that** the tube bundle has an inlet side comprising inlet ends of the plurality of tubes (316A-N, 416AN), wherein the inlet side of the tube bundle is connected to a tube end plate which is gas-tightly connected on its entire circumference to the inner wall of the crude synthesis gas manifold (112, 210, 310, 410), and wherein the inlet ends of the plurality of tubes (316A-N, 416A-N) are passed through the tube end plate so that they are freely accessible for introducing the second superheated feed gas partial stream.

6. Process according to any one of the preceding claims, **characterized in that** a second steam stream is added to the second superheated feed gas partial stream prior to its introduction into the fixed bed catalytic reactor (116, 315, 415) to adjust a second steam to carbon ratio.

7. Process according to any one of the preceding claims, **characterized in that** the same type of solid particulate reforming catalyst is used in the main reforming stage and in the fixed bed catalytic reactor (116, 315, 415).

8. Process according to any one of the preceding claims, **characterized in that** the plurality of tubes (316A-N, 416A-N) in the fixed bed catalytic reactor (116, 315, 415) are configured according to at least one element selected from the following group: finned tubes, preferably with fins extending circularly around the entire circumference of the tube; tubes extending in a plane in an undulating or sinusoidal manner; tubes extending in a helical manner.

9. Process according to any one of the preceding claims, **characterized in that** the proportion of the second superheated feed gas partial stream to the superheated feed gas stream is between greater than zero and 25% by volume, preferably between 10% and 20% by volume.

10. Process according to any one of the preceding claims, **characterized in that** the reforming temperature in the plurality of reformer tubes (206A-N, 306A-N, 406A-N) in the main reforming stage is between 750 and 920 °C, preferably between 850 and 900 degrees Celsius (°C), and **in that** the reforming temperature in the plurality of tubes (316A-N, 416A-N) in the fixed bed catalytic reactor (116, 315, 415) is between 800 and 910 °C.

11. Process according to any one of the preceding claims, **characterized in that** the first steam stream discharged from the waste heat boiler (114, 212, 312, 412) forms at least part of the total steam production of the process, the total steam production of the process being between 0 and 0.6 kg/m_{N}³, preferably between 0 and 0.3 kg/m_{N}³, calculated as kilogram (kg) of steam per standard cubic meter (m_{N}³) of hydrogen produced.

12. Plant (100) for producing a synthesis gas product containing hydrogen and carbon oxides from a hydrocarbon-containing feed gas, preferably natural gas or naphtha, comprising the following components in fluid connection with each other:
(a) means (102) for providing the feed gas containing hydrocarbons, preferably in desulfurized form,
(b) a feed gas superheater (104), means (118) for introducing the feed gas into the feed gas superheater (104), means (120) for discharging the feed gas heated to a steam reforming inlet temperature from the feed gas superheater (104) as a superheated feed gas stream,
(c) means (106) for splitting the superheated feed gas stream into a first superheated feed gas partial stream and a second superheated feed gas partial stream,
(d) a main reforming stage comprising a plurality of reformer tubes (206A-N, 306A-N, 406A-N) filled with a solid particulate reforming catalyst (208, 308, 408), the plurality of reformer tubes (206A-N, 306A-N, 406A-N) being arranged in a reformer furnace (110) whose interior is heated by means of a plurality of burners, means for introducing the first superheated feed gas partial stream into the main reforming stage,
(e) means (108) for splitting the first superheated feed gas partial stream into a plurality of feed gas individual streams, means (124) for supplying one feed gas individual stream each to an inlet of a reformer tube (206A-N, 306A-N, 406A-N),
(f) means (126) for discharging the crude synthesis gas individual streams from the plurality of reformer tubes (206A-N, 306AN, 406A-N) and means (126) for introducing the crude synthesis gas individual streams into a crude synthesis gas manifold (112, 210, 310, 410) in fluid connection with the plurality of reformer tubes (206A-N, 306A-N, 406A-N), thereby obtaining a first hot crude synthesis gas collection stream,
(g) a waste heat boiler (114, 212, 312, 412) in fluid connection with the crude synthesis gas manifold (112, 210, 310, 410) and configured to allow cooling of the first hot crude synthesis gas collection stream in indirect heat exchange against a stream of water as a coolant, means (128) for introducing the first hot crude synthesis gas collection stream into the waste heat boiler (114, 212, 312, 412),
(h) means (130, 132) for discharging a cooled crude synthesis gas collection stream and a first steam stream from the waste heat boiler (114, 212, 312, 412),
(i) means for feeding the cooled crude synthesis gas collection stream to at least one further purification, conditioning or processing step,
(j) a fixed bed catalytic reactor (116, 315, 415) comprising at least one catalyst bed containing a solid particulate reforming catalyst (318, 418), the fixed bed catalytic reactor (116, 315, 415) being disposed inside the crude synthesis gas manifold (112, 210, 310, 410) and wherein the at least one catalyst bed is in indirect heat exchange relationship with the first hot crude synthesis gas collection stream, means (134, 314, 414) for supplying the second superheated feed gas partial stream to the fixed bed catalytic reactor (116, 315, 415), and
(k) means (136) for discharging a second hot crude synthesis gas collection stream from the fixed bed catalytic reactor (116, 315, 415) and means (136) for introducing the second hot crude synthesis gas collection stream into the waste heat boiler (114, 212, 312, 412) along with or combined with the first hot crude synthesis gas collection stream.

13. Plant (100) according to claim 12, **characterized in that** the fixed-bed catalytic reactor (116, 315, 415) is designed and arranged inside the crude synthesis gas manifold (112, 210, 310, 410) such that the second superheated feed gas partial stream flows through the fixed-bed catalytic reactor (116, 315, 415) in co-current or counter-current relative to the first hot crude synthesis gas collection stream.

14. Plant (100) according to claim 12 or 13, **characterized in that** the fixed bed catalytic reactor (116, 315, 415) is constructed as a tubular reactor with at least one, preferably a plurality of tubes (316AN, 416A-N), the plurality of tubes (316A-N, 416A-N) being filled with a solid, particulate reforming catalyst (318, 418), wherein the second superheated feed gas partial stream is enabled to flow through the plurality of tubes (316A-N, 416A-N) in co-current or counter-current relative to the first hot crude synthesis gas collection stream, and wherein the plurality of tubes (316A-N, 416A-N) and the second superheated feed gas partial stream flowing through them are in an indirect heat exchange relationship with the first hot crude synthesis gas collection stream.

15. Plant (100) according to claim 14, **characterized in that** the fixed bed catalytic reactor (116, 315, 415) is constructed as a tubular reactor with a plurality of tubes (316A-N, 416A-N), wherein the plurality of tubes are arranged as a tube bundle inside the crude synthesis gas manifold (112, 210, 310, 410), wherein the plurality of tubes (316AN, 416A-N) are spaced apart in the tube bundle to allow the first hot crude synthesis gas collection stream to flow around the plurality of tubes (316A-N, 416A-N), and wherein longitudinal axis of the tube bundle is parallel to or coincides with the longitudinal axis of the crude synthesis gas manifold (112, 210, 310, 410).

16. Plant (100) according to claim 15, **characterized in that** the tube bundle has an inlet side comprising inlet ends of the plurality of tubes (316A-N, 416A-N), wherein the inlet side of the tube bundle is connected to a tube end plate which is gas-tightly connected on its entire circumference to the inner wall of the crude synthesis gas manifold (112, 210, 310, 410), and wherein the inlet ends of the plurality of tubes (316A-N, 416A-N) are passed through the tube end plate so as to be freely accessible for introducing the second superheated feed gas partial stream.

17. Plant (100) according to any one of claims 12 to 16, **characterized by** further comprising means for allowing a second steam stream to be added to the second superheated feed gas partial stream prior to its introduction into the fixed bed catalytic reactor (116, 315, 415) to adjust a second steam to carbon ratio.

18. Plant (100) according to any one of claims 12 to 17, **characterized in that** the plurality of tubes (316A-N, 416A-N) in the fixed bed catalytic reactor (116, 315, 415) are configured according to at least one element selected from the following group: finned tubes, preferably with fins extending circularly around the entire circumference of the tube; tubes extending in a plane in an undulating or sinusoidal manner; tubes extending in a helical manner.
